# EUROPEAN PATENT APPLICATION

(11) **EP 4 838 900 A1**
(43) Date of publication of application: **11.11.2026**
(21) Application number: 25200285.2
(22) Date of filing: 04.09.2025
(51) Int. Cl.: H04N 23/50, H04N 23/54, H04N 23/55, H04N 23/57, B60R 11/04, G03B 17/02

(54) **CAMERA MODULE FOR VEHICLES AND ITS MANUFACTURING METHOD**

(30) Priority: 09.05.2025 KR 20250060320
(71) Applicant: Hyundai Mobis Co., Ltd., Gangnam-gu Seoul 06141 (KR)
(72) Inventor: KIM, Hyung Min, Yongin-si 16891 (KR); LEE, Won Moo, Yongin-si 16891 (KR)
(74) Representative: Vossius & Partner Patentanwälte Rechtsanwälte mbB

(57) **Abstract**

A camera module for vehicles and a method therefor are provided. The camera module includes: a lens portion including at least one lens; a unibody integrally shaped with the lens portion; an insulator at least partially accommodated in an internal space of the unibody; a printed circuit board (PCB) including an image sensor and coupled to a rear of the lens portion and the unibody; and a rear body having an internal space to accommodate the PCB and coupled to the unibody. The rear body is made of dissimilar materials and includes a metal portion and a plastic portion. The metal portion is disposed in front of the plastic portion.

## Description

### BACKGROUND

### 1. Field

The disclosure relates to a camera module for vehicles and its manufacturing method.

### 2. Description of the Related Art

The content described in this section merely provides background information for the disclosure and does not constitute the related art.

Various types of cameras are arranged in a vehicle and used for various purposes. For example, the cameras for vehicles may be utilized for enhanced driving safety, sensing around the vehicle, parking assistance, driver assistance systems, and the like.

The camera for vehicles may be used to monitor road conditions by photographing the surroundings of the vehicle while driving. The camera for vehicles may be used to photograph the rear of the vehicle during parking to assist in parking. Recently, most vehicles provide a surround-view system that synthesizes images from cameras disposed at the front, rear, left, and right sides of the vehicle to display the surroundings of the vehicle on a display.

As the usage of the camera for vehicles is subdivided in this way, the length and the size of the outer diameter of the lens of the camera for vehicles are required in various ways. In addition, the functions of the camera for vehicles and the specifications of the camera lens are increasing based on the high pixel and high resolution requirements of the lens of camera for vehicles. The total top length (TTL) of the lens of camera for vehicles is increasing. A precision manufacturing method is required based on a high pixel and high resolution requirement of the lens of camera for vehicles.

As the demand for high pixel and high resolution of the camera for vehicles increases and the length of the lens of camera for vehicles becomes longer, it becomes important to properly align a center of gravity of the camera module for vehicles.

In the case of a conventional camera, the lens is coupled with a front body to secure the lens and the image sensor substrate. The structure of the housing may be complicated for center-of-gravity alignment of the lens with increased TTL, and the number of parts for coupling may be increased and the production cost may be increased.

In the case of a conventional camera, the rear body housing coupled to the front body is entirely made of metal. Alternatively, the main housing of the rear body is made of metal and only a part thereof is made of plastic. When the housing is made entirely of metal member, there is a disadvantage in that the processing process is complicated and thus the processing cost and the production cost increase. In addition, there may be a problem in that it is difficult to form a hermetic structure when dissimilar materials are combined. In the welding process between the metal members, cracks or bursts may occur in the plastic member adjacent to the metal portion due to heat.

In the case of a conventional camera, the transient electric flow of the housing metal member flows into the printed circuit board (PCB) side, whereby the electromagnetic stability may be degraded.

### SUMMARY

Accordingly, the disclosure is intended to solve these problems, and a main object thereof is to provide a structure of a camera module that effectively aligns a center of gravity of a lens, including a unibody structure.

Another purpose is to couple the insulator to the unibody to prevent the transient electrical flow from flowing into the circuit element side.

Still another object of the disclosure is to provide a camera for vehicles having a waterproof and hermetic structure when a dissimilar material is bonded by using a laser processing portion.

An aspect of the disclosure are not limited to problems described above, and other problems not explicitly mentioned will be clearly understood by those skilled in the art based on the following description.

In a general aspect, a camera module for vehicles includes: a lens portion comprising at least one lens; a unibody integrally shaped with the lens portion; an insulator at least partially accommodated in an internal space of the unibody; a printed circuit board (PCB) comprising an image sensor and coupled to a rear of the lens portion and the unibody; and a rear body having an internal space configured to accommodate the PCB and coupled to the unibody, wherein the rear body is made of dissimilar materials and comprises a metal portion and a plastic portion, and wherein the metal portion is disposed in front of the plastic portion.

The unibody may include first protrusions protruding toward the rear, wherein the PCB may include first through-holes that are penetrably coupled with the first protrusions.

The plastic portion may include second protrusions on a front surface, wherein the second protrusions are penetrably coupled with second through-holes disposed on a rear surface of the metal portion.

The camera module may further include a laser processing portion configured to correspond in shape to a front surface of the plastic portion and disposed adjacent to the plurality of second through holes.

The second through holes may include a first central hole at a center and first outer holes arranged in a radial direction of the first central hole.

The unibody may include a coupling groove at least partially recessed in a rear surface thereof, wherein the insulator may be fitted to an outer peripheral surface of the coupling groove, and wherein the insulator and the PCB may be spaced apart from each other.

The camera module may further include a plastic plate portion received in an internal space of the metal portion, the plastic plate portion including third through-holes for penetrable coupling with the first protrusions.

The third through-holes may include a second central hole at a center and second outer holes arranged in a radial direction from the second central hole.

The plastic portion may be coupled to the rear of the metal portion, wherein the camera module may further include an epoxy bonding between the metal portion and the plastic portion.

In another general aspect, a method for manufacturing a camera module for vehicles includes: screw-coupling an insulator to an outer peripheral surface of a coupling groove at least partially recessed in a rear surface of a unibody; penetrably coupling first through-holes disposed in a printed circuit board (PCB) with first protrusions protruding toward the rear of the unibody; coupling the PCB and the unibody; performing laser processing on a region adjacent to second through-holes disposed on the rear surface of a metal portion; and fitting a second protrusion disposed on the front surface of a plastic portion into the second through-holes.

As described above, according to the present embodiment(s), the camera module for vehicles has an effect of providing a unibody structure capable of effectively aligning the center of gravity, thereby providing structural stability.

By disposing an insulator in the unibody, it is possible to prevent the transient electric flow from flowing into the circuit element side, thereby enhancing the electromagnetic stability.

There is an effect that it is possible to provide a camera module for vehicles having a waterproof and hermetic structure when a dissimilar material is combined using a laser processing portion.

### BRIEF DESCRIPTION OF THE DRAWINGS

FIG. 1 is a diagram illustrating a configuration of a camera device according to an embodiment of the disclosure.
FIG. 2 is an exploded perspective view illustrating a configuration of a camera device according to an embodiment of the disclosure.
FIG. 3 is a cross-sectional view taken along the Z-Y plane of FIG. 1.

### DETAILED DESCRIPTION

Hereinafter, some embodiments of the disclosure will be described in detail with reference to exemplary drawings. It should be noted that, in assigning reference numerals to the components in each drawing, the same components have the same numerals as much as possible, even if they are shown in different drawings. In addition, in describing the disclosure, when it is determined that a specific description of a related known configuration or function may obscure the gist of the disclosure, a detailed description thereof will be omitted.

In describing the components of the present invention, terms such as "first", "second", "A", "B", "(a)", "(b)" and the like may be used. These terms are merely used to distinguish one component from another component, and the nature, sequence, or order of that component is not limited by the terms.

When a component is described as being "connected", "coupled" or "joined" to another component, it should be understood that the component may be directly connected or joined to the other component, but that another component may be "connected", "coupled" or "joined" between each component.

Throughout the specification, when a portion is referred to as "comprising" or "including" a component, this means that other components may be further included instead of excluding other components unless otherwise stated.

The terms "portion", "module", and the like described in the specification mean a unit that processes at least one function or operation, and may be implemented by hardware or software, or a combination of hardware and software.

It should be noted that, unless otherwise stated, the description of one embodiment may be applied to other embodiments as well.

The description of the invention, disclosed with reference to the accompanying drawings, is intended to describe exemplary embodiments of the disclosure and is not intended to represent the only embodiments in which the disclosure may be practiced.

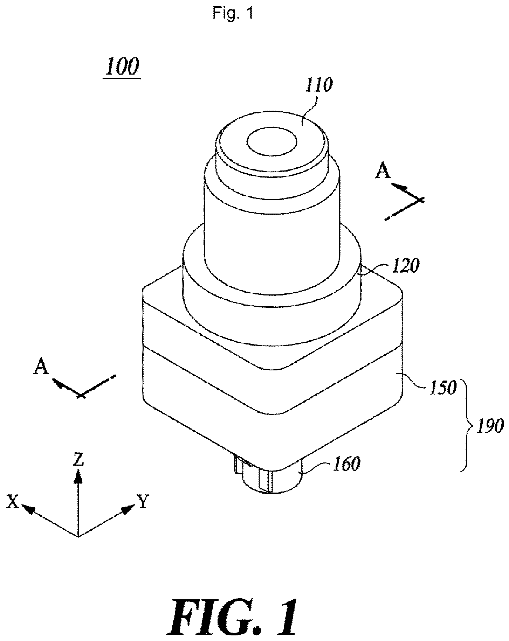

FIG. 1 is a diagram illustrating a configuration of a camera device according to an embodiment of the disclosure.

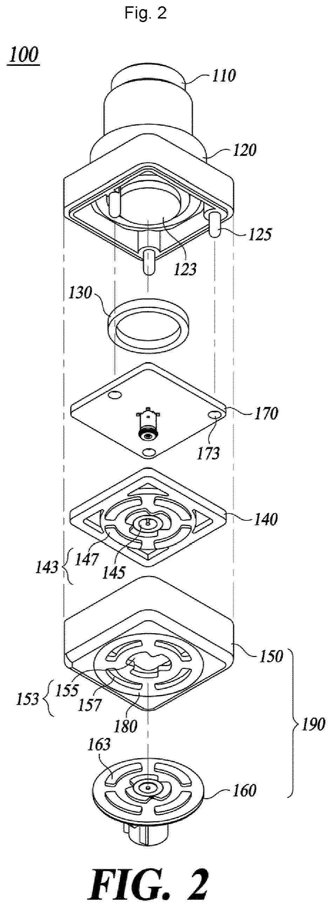

FIG. 2 is an exploded perspective view illustrating a configuration of a camera device according to an embodiment of the disclosure.

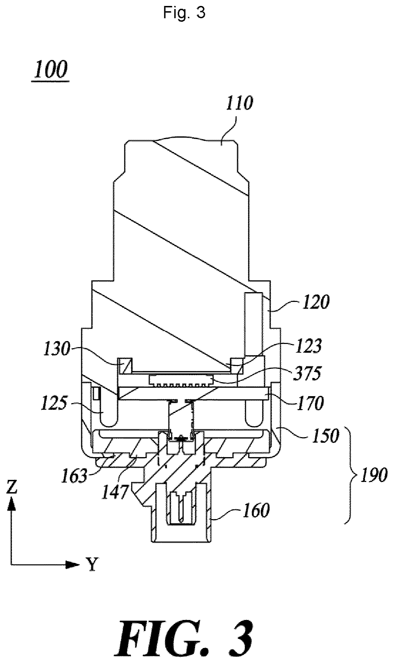

FIG. 3 is a cross-sectional view taken along the Z-Y plane of FIG. 1.

Referring to FIGS. 1 to 3, a front camera module for vehicles 100 includes a lens portion 110, a unibody 120, an insulator 130, a printed circuit board (PCB) 170, and a rear body 190. The rear body 190 includes some or all of the metal portion 150 and the plastic portion 160.

Directions are defined herein to clarify the description of the disclosure. The directions in the disclosure are used in a relative sense. The z-axis disclosed in FIG. 2 represents the front and rear. The (+) direction of the z-axis represents the front, and the (-) direction represents the rear.

Referring to FIG. 1, a rear body 190 is coupled to the rear of the lens portion 110 and the unibody 120.

The rear body 190 is disposed at the rear of the unibody and is coupled the unibody 120. The rear body 190 is made based on dissimilar materials. The rear body 190 includes a metal portion 150 and a plastic portion 160. The metal portion 150 of the camera module for vehicles according to the disclosure may be made of A1050 or A3003. The plastic portion 160 of the camera module for vehicles according to the disclosure may be made of PBT material. However, the materials of the metal portion 150 and the plastic portion 160 are not limited thereto.

A plastic portion 160 is coupled to the rear of the metal portion 150. The coupling between the plastic portion 160 and the metal portion 150 may become weakened by an external impact applied to the front camera module for vehicles 100. According to an embodiment of the disclosure, an epoxy bonding may be further included in a region where the metal portion 150 and the plastic portion 160 are coupled. Epoxy bonding may be used to enhance waterproofing and hermeticity performance of the camera module for vehicles according to the disclosure. Alternatively, when the metal portion 150 and the plastic portion 160 are coupled, deep drawing processing may be further included.

The plastic plate portion 140 is received in the internal space of the rear body 190. The metal portion 150 is disposed in front of the plastic portion 160. The plastic portion 160 includes a plurality of second protrusions 163 on the front surface. The metal portion 150 includes a plurality of second through-holes 153 on the rear surface. The plurality of second protrusions 163 and the plurality of second through holes 153 are penetrably coupled. The plurality of second through-holes 153 includes a first center hole 155 at the center and a plurality of first outer holes 157. The plurality of first outer holes 157 are disposed in a radial direction from the first central hole 155. According to an embodiment, the first outer hole 157 may be four.

The lens portion 110 may include at least one lens (not shown). The lens portion 110 may be used to fix and protect the lens. The inside of the lens portion 110 may be configured to be blacked out so that incident rays are not reflected. The lens portion 110 may include a focusing device (not shown) configured to move and focus the lens.

The lens portion 110 has an integral shape with the unibody 120. The inside of the unibody 120 may include a protrusion (not shown) configured to be integrated with the lens portion. The inner peripheral surface of the protrusion may have a shape corresponding to the lens portion 110 to accommodate the lens portion 110. In order to increase the heat dissipation performance of the heat generated by the PCB 170, the unibody 120 may be made of a metal material having high thermal conductivity. The unibody 120 according to an embodiment of the disclosure may be, for example, made of AL6063. However, the material of the unibody 120 is not limited thereto.

In the conventional camera module for vehicles, the lens portion and the unibody are not integrally formed, but are formed as separate rigid bodies. The conventional camera module for vehicles adopts a structure in which the lens portion and the unibody are threadedly coupled. That is, after the lens portion is coupled to the front body (not shown), an O-ring (not shown) is disposed at the rear of the lens portion. In the conventional case, the front body is coupled to the lens portion between different components that are separated from each other, and an additional component called a thread (not shown) is further required. In the conventional case, there is a problem that production costs are high because additional components are required. In addition, because of many number of parts, there is a problem that the shape of the front body (not shown) becomes complicated for center-of-gravity alignment, and the manufacturing cost increases.

On the other hand, the front camera module for vehicles 100 according to the disclosure has a structure in which the lens portion 110 and the unibody 120 are integrally formed without additional components. That is, the front camera module for vehicles 100 according to the disclosure does not require the thread (not shown) and the O-ring (not shown) used in the related art. The front camera module for vehicles 100 according to the disclosure has an effect of simplifying a process procedure and reducing a production cost compared to the conventional case. In addition, the center of gravity is more aligned than in the conventional case, which has the effect of increasing the structural stability. Unlike the conventional camera module for vehicles, the front camera module for vehicles 100 according to the disclosure does not have a configuration in which the lens portion and the front body (not shown) are coupled to each other, and thus has an advantage in that the size and length of the lens portion 110 are not limited.

The unibody 120 includes a coupling groove 123 that is at least partially recessed in a rear surface. The coupling groove 123 of the unibody has a circular shape, and the insulator 130 is fitted to the outer peripheral surface. The insulator 130 may be at least partially accommodated in an internal space of the unibody 120. The insulator 130 of the camera module for vehicles according to the disclosure may be made of a plastic material. However, the material of the insulator 130 is not limited thereto. The insulator 130 is disposed in the metallic unibody 120. The insulator 130 may induce a flow of transient electricity to an outer periphery rather than a center of the unibody 120. The insulator 130 of the camera module for vehicles according to the disclosure may prevent an electrostatic discharge (ESD) from flowing into the circuit element side. The insulator 130 of the front camera module for vehicles 100 according to the disclosure has an effect of enhancing electromagnetic stability of the camera module for vehicles.

The PCB 170 is accommodated in the interior space of the rear body 190. The PCB 170 is coupled to the rear of the lens portion 110 and the unibody 120. The PCB 170 includes an image sensor. Light passing through the lens portion 110 travels along the central axis of the lens portion 110 and is incident on the PCB 170.

The unibody 120 includes a plurality of first protrusions 125 protruding toward the rear. The PCB 170 includes a plurality of first through-holes 173 that are piercingly coupled to the plurality of first protrusions 125. Alternatively, the unibody 120 may be coupled with a plurality of pins (not shown) when coupled with the rear body 190. In this case, a plurality of pins may be sintered in the unibody, and a sizing operation may be further performed.

The laser processing portion 180 is disposed in a region adjacent to the plurality of second through-holes. The surface of the laser processing portion 180 may be subjected to a surface treatment for improving delamination of a corresponding surface between the metal portion 150 and the plastic portion 160. Alternatively, the surface of the laser processing portion 180 may be subjected to chemical treatment using a wet activation treatment (WAT) method. The laser processing portion 180 is configured to correspond in shape to a front surface of the plastic portion. The laser processing portion 180 securely fixes the plastic portion 160 and the metal portion 150 to prevent misalignment of the center of gravity caused by external impacts. The laser processing portion 180 may improve hermeticity performance of a coupling region between the metal portion 150 and the plastic portion 160. The laser processing portion 180 forms the coupling region between the metal portion 150 and the plastic portion 160 and separates the metal portion 150 from the plastic portion 160. The metal portion 150 and the unibody 120 may be welded. When the metal portion 150 and the unibody 120 are welded, the plastic portion 160 is spaced apart from the welded area, thereby preventing bursting of the plastic portion 160 due to welding heat.

The plastic plate portion 140 is received in an internal space of the metal portion 150. The plurality of first protrusions 125 may sequentially penetrate through the PCB 170 and the plastic plate portion 140. The plastic plate portion 140 includes a plurality of third through-holes 143 for penetrative coupling with the plurality of first protrusions 125. The plurality of third through-holes 143 includes the second through-holes 153 at the center and a plurality of second outer holes 147. The plurality of second outer holes 147 may be disposed in a radial direction from the second through-holes 153. The first central hole 155 and the second central hole 145 correspond to each other. The plurality of first outer holes 157 and the plurality of second outer holes 147 correspond to each other. The plurality of first protrusions 125 may sequentially penetrate the plurality of first outer holes 157 and the plurality of second outer holes 147. The metal portion 150 and the rear body 190 are penetrative coupled to and fixed the plurality of first protrusion portions 125, the plurality of first outer holes 157, and the plurality of second outer holes 147.

The PCB 170 may be equipped with a main processor (not shown) and the image sensor 375. The main processor controls various functions and operations of the front camera module for vehicles 100. The main processor may process the image data generated by the image sensor 375 and perform image processing such as noise removal to enhance the quality of the image.

A method for manufacturing the front camera module for vehicles 100 according to the disclosure will be described. (1) The insulator 130 is screw-coupled to an outer peripheral surface of the coupling groove at least partially recessed in the rear surface of the unibody 120. (2) The plurality of first through-holes 173 disposed in the PCB 170 and the plurality of first protrusions 125 protruding toward the rear of the unibody are penetratively coupled. (3) The PCB 170 and the unibody 120 are coupled. (4) Laser processing is performed on the region adjacent to the plurality of second through-holes 153 disposed on the rear surface of the metal portion 150. (5) The second protrusion 163 disposed on the front surface of the plastic portion is fitted into the second through hole 153.

Processes (1) to (5) described above do not necessarily have to be performed in order. It is also possible to perform the process by changing the order within a range obvious to those skilled in the art. As described above, in the case of the front camera module for vehicles 100 according to the disclosure, unlike the conventional case, the laser processing portion 180 can be further included to increase the coupling force between the metal portion 150 and the plastic portion 160.

## Claims

1. A camera module for vehicles, the camera module comprising:
a lens portion comprising at least one lens;
a unibody integrally shaped with the lens portion;
an insulator at least partially accommodated in an internal space of the unibody;
a printed circuit board (PCB) comprising an image sensor and coupled to a rear of the lens portion and the unibody; and
a rear body having an internal space configured to accommodate the PCB and coupled to the unibody,
wherein the rear body is made of dissimilar materials and comprises a metal portion and a plastic portion, and
wherein the metal portion is disposed in front of the plastic portion.

2. The camera module of claim 1, wherein the unibody comprises a plurality of first protrusions protruding toward the rear, and
wherein the PCB comprises a plurality of first through-holes that are penetrably coupled with the plurality of first protrusions.

3. The camera module of claim 1, or 2, wherein the plastic portion comprises a plurality of second protrusions on a front surface, and
wherein the plurality of second protrusions are penetrably coupled with a plurality of second through-holes disposed on a rear surface of the metal portion.

4. The camera module of claim 3, further comprising:
a laser processing portion configured to correspond in shape to a front surface of the plastic portion and disposed adjacent to the plurality of second through holes.

5. The camera module of claim 3, or 4, wherein the plurality of second through holes comprises:
a first central hole at a center and a plurality of first outer holes arranged in a radial direction of the first central hole.

6. The camera module of any one of claims 1 to 5, wherein the unibody comprises a coupling groove at least partially recessed in a rear surface thereof,
wherein the insulator is fitted to an outer peripheral surface of the coupling groove, and
wherein the insulator and the PCB are spaced apart from each other.

7. The camera module of any one of claims 2 to 6, further comprising:
a plastic plate portion received in an internal space of the metal portion, the plastic plate portion comprising a plurality of third through-holes for penetrable coupling with the plurality of first protrusions.

8. The camera module of claim 7, wherein the plurality of third through-holes comprises a second central hole at a center and a plurality of second outer holes arranged in a radial direction from the second central hole.

9. The camera module of any one of claims 1 to 8, wherein the plastic portion is coupled to the rear of the metal portion, and
wherein the camera module further comprises an epoxy bonding between the metal portion and the plastic portion.

10. A method for manufacturing a camera module for vehicles, the method comprising:
screw-coupling an insulator to an outer peripheral surface of a coupling groove at least partially recessed in a rear surface of a unibody;
penetrably coupling a plurality of first through-holes disposed in a printed circuit board (PCB) with a plurality of first protrusions protruding toward the rear of the unibody;
coupling the PCB and the unibody;
performing laser processing on a region adjacent to a plurality of second through-holes disposed on the rear surface of a metal portion; and
fitting a second protrusion disposed on the front surface of a plastic portion into the second through-holes.
